(19) **Europäisches Patentamt / European Patent Office / Office européen des brevets**

(11) **EP 4 524 899 B1**

(12) **EUROPEAN PATENT SPECIFICATION**

(45) Date of publication and mention
of the grant of the patent:
**29.04.2026  Bulletin 2026/18**

(21) Application number: **23937749.2**

(22) Date of filing: **25.12.2023**

(51) International Patent Classification (IPC):
**G06T 19/00** (2011.01)  **G06T 7/00** (2017.01)
**G06T 7/55** (2017.01)  **G06V 10/82** (2022.01)

(52) Cooperative Patent Classification (CPC):
**G06T 15/20; G06T 7/55; G06T 15/08; G06T 17/00;
G06V 10/82;** G06T 2207/20081; G06T 2207/20084

(86) International application number:
**PCT/JP2023/046504**

(87) International publication number:
**WO 2024/247330 (05.12.2024 Gazette 2024/49)**

(54) **LEARNING DEVICE, SERVER DEVICE, AND PROGRAM**

LERNVORRICHTUNG, SERVERVORRICHTUNG UND PROGRAMM

DISPOSITIF D'APPRENTISSAGE, DISPOSITIF SERVEUR ET PROGRAMME

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.05.2023  JP 2023087190**

(43) Date of publication of application:
**19.03.2025  Bulletin 2025/12**

(73) Proprietor: **Bestat Inc.**
**Tokyo 113-0033 (JP)**

(72) Inventors:
• **MATSUDA, Naoko**
**Tokyo 113-0033 (JP)**
• **OHASHI, Ryosuke**
**Tokyo 113-0033 (JP)**

(74) Representative: **Bandpay & Greuter**
**11 rue Christophe Colomb**
**75008 Paris (FR)**

(56) References cited:
**CN-A- 114 429 538**

• **WANG PENG ET AL: "NeuS: Learning Neural
Implicit Surfaces by Volume Rendering for Multi-
view Reconstruction", HTTPS://ARXIV.ORG, 20
June 2021 (2021-06-20), pages 1 - 22,
XP093244836, Retrieved from the Internet
<URL:https://arxiv.org/pdf/2106.10689v1> DOI:
https://doi.org/10.48550/arXiv.2106.10689**
• **WANG PENG, LIU LINGJIE, LIU YUAN,
THEOBALT CHRISTIAN, KOMURA TAKU, WANG
WENPING: "NeuS: Learning Neural Implicit
Surfaces by Volume Rendering for Multi-view
Reconstruction", HTTPS://ARXIV.ORG, ARXIV,
20 June 2021 (2021-06-20), pages 1 - 22,
XP093244836, Retrieved from the Internet
<URL:https://arxiv.org/pdf/2106.10689v1> DOI:
https://doi.org/10.48550/arXiv.2106.10689**
• **DECAI CHEN; PENG ZHANG; INGO FELDMANN;
OLIVER SCHREER; PETER EISERT: "Recovering
Fine Details for Neural Implicit Surface
Reconstruction", ARXIV.ORG, CORNELL
UNIVERSITY LIBRARY, 21 November 2022
(2022-11-21), US, XP091374739**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a technique for estimating the three-dimensional shape of an object from a plurality of images in which the object is captured.

Background Art

Photogrammetry is a technique for estimating the three-dimensional shape of an object from a plurality of images in which the object is captured. For example, Patent Document 1 discloses, as a photogrammetry technique, an apparatus and a method for generating a three-dimensional (3D) model of a subject from images captured by a plurality of cameras. Published Paper 1 discloses "neural surface reconstruction method, called NeuS, for reconstructing objects and scenes with high fidelity from 2D image inputs".

Citation List

Patent Document

Patent Document 1: JP 2021-71749A
Published Paper 1: "NeuS: Learning Neural Implicit Surfaces by Volume Rendering for Multi-view Reconstruction", published on 20-06-2021 by Peng Wang et Al and found at https:// arxiv.org/pdf/2106.10689v1.

Summary of Invention

Technical Problem

The present invention is defined by the appended independent claims. Processing performed to generate an image of an object, which shows the object that would appear when viewed from a specified viewpoint, given the shape, material, and color of the object, the position of the light source, the light intensity, and so on, is known as rendering. In contrast, photogrammetry involves processing performed to estimate the three-dimensional shape, color, texture, and so on of an object from a plurality of images in which the object is captured. This processing is the inverse of rendering, and therefore it is known as inverse rendering. An artificial neural network (ANN) technique may be applied to such an inverse rendering problem in photogrammetry.

A photogrammetry technique to which the ANN is applied uses images obtained by capturing an object from a plurality of viewpoints as training data to train a machine learning model that includes optical assumptions. This machine learning model is constituted by, for example, a multilayer perceptron (MLP). By using this trained machine learning model, it is possible to generate a three-dimensional model of an object (also called a virtual object) in a virtual space from new images of the object captured from a plurality of viewpoints. Using this generated three-dimensional model, it is possible to generate an image (also called a virtual image) that can be obtained when an image of this virtual object is captured from a given viewpoint (also called a virtual viewpoint) in the virtual space.

Neural Radiance Fields (NeRF) is a method that uses the MLP to represent a density field and a brightness field in a three-dimensional virtual space and generate a virtual image of a virtual object captured from a given virtual viewpoint in this virtual space. The NeRF generates the two-dimensional virtual image described above through volume rendering. The NeRF uses a "volumetric representation" where the units are so-called "voxels" obtained by dividing a three-dimensional virtual space into a grid shape, for example. Therefore, inverse rendering based on the NeRF is said to be able to perform optimization more stably than methods based on a curved surface representation (described later).

On the other hand, another method for generating the virtual image described above is the Neural Scene Representation (NeuS). The NeuS is a method for generating a virtual object in a virtual space based on a curved surface representation. The NeuS is a technique for generating a virtual object in the form of a point cloud, a mesh, or the like by representing the surface of an object as a zero-level set of a signed distance function (SDF) approximated by the MLP, and training a model of this surface, using images captured from a plurality of viewpoints as training data. The NeuS represents the surface of an object using the SDF, which is a continuous function approximated by the MLP, and therefore has an advantage in representing object surfaces constituted by curved surfaces compared to the NeRF, which uses a volumetric representation.

When training the machine learning model described above using deep learning such as the NeRF and the NeuS, the density at each end of the line of sight (background points and virtual viewpoints) for viewing a virtual object is conventionally determined by chance. Therefore, with conventional techniques, if an image in the training data includes a background, the background interferes with training, so it is necessary either to remove the background using an appropriate foreground mask or to perform modeling using the NeRF. For example, when estimating the three-dimensional shape of an object from a plurality of images of the object, the technology described in Patent Document 1 requires a binary mask image in which the object and other parts are expressed in different tones (for example, black and white).

One object of the present invention is to eliminate the need to remove the background from each image when training a machine learning model that uses images obtained by capturing an object from a plurality of viewpoints as training data to estimate a three-dimensional model of the object in a virtual space.

Solution to Problem

In one aspect, the present invention provides a machine learning device including: an acquisition means for acquiring training data in which a plurality of viewpoints are associated with images obtained by capturing objects from the plurality of viewpoints; a generation means for generating, in a virtual space, a virtual image that can be obtained when an image of a virtual object corresponding to the object is captured from a virtual viewpoint corresponding to the viewpoint, using a machine learning model that includes densities at positions on a line of sight that extends from a background point in a background of the virtual object to the virtual viewpoint through the virtual object; and a training means for training the machine learning model by, for each virtual viewpoint, comparing the generated virtual image with the image captured from the viewpoint corresponding to the virtual viewpoint, wherein the machine learning model is constrained so that the densities at the background point and the virtual viewpoint are each a predetermined constant.

In a preferred aspect, the machine learning model includes a surface function that defines a surface of the virtual object using a multi-layer perceptron, and a density function that indicates densities using the surface function, the training means trains the machine learning model by updating the surface function using a backpropagation method, and the density function is constrained to have a density of 1 at the background point and a density of 0 at the virtual viewpoint.

In another preferred aspect, in the machine learning model, transmittance function T indicating a transmittance of light that travels along the line of sight to the virtual viewpoint, and opacity function $\alpha$ indicating an opacity at a given position along the line of sight are expressed by Formulas:

$$T_i = \prod_{j=1}^{i-1}(1 - \alpha_j)$$

$$\alpha_i = \max\left(\frac{\Phi_s(f(\mathbf{p}(t_i))) - \Phi_s(f(\mathbf{p}(t_{i+1})))}{\Phi_s(f(\mathbf{p}(t_i)))}, 0\right)$$

where density function $\Phi$ indicates a density at a given position along the line of sight, and surface function f defines the surface of the virtual object.

From another point of view, the present invention provides a server including: an image acquisition means for acquiring captured images of a subject captured from a plurality of shooting points; an estimation means for estimating the shooting points based on feature points extracted from the captured images; and a three-dimensional data generation means for generating three-dimensional data of the subject, using the estimated shooting points, the captured images corresponding to the shooting points, and the machine learning model.

In a preferred embodiment, the server further includes: a receiving means for receiving a request from a terminal; and a supply means for supplying, to the terminal, the three-dimensional data generated by the three-dimensional data generation means in response to the request.

In another preferred embodiment, the server further includes: a receiving means for receiving, from a terminal, a specification of a virtual viewpoint from which an image of the subject is captured, a virtual image generation means for generating a virtual image that can be obtained when an image of the subject expressed by the three-dimensional data generated by the three-dimensional data generation means is captured from the virtual viewpoint indicated by the specification; and a supply means for supplying, to the terminal, the virtual image generated by the virtual image generation means in response to the specification.

From another point of view, the present invention provides a program for enabling a computer to carry out: a step of acquiring training data in which a plurality of viewpoints and images obtained by capturing an object from the plurality of viewpoints are associated with each other; a step of generating, in a virtual space, a virtual image that can be obtained when a virtual object corresponding to the object is captured from a virtual viewpoint corresponding to the viewpoint, using a machine learning model that includes densities at positions on a line of sight that extends from a background point in a background of the virtual object to the virtual viewpoint through the virtual object; and a step of training the machine learning model by, for each virtual viewpoint, comparing the generated virtual image with the image captured from the viewpoint corresponding to the virtual viewpoint, wherein the machine learning model is constrained so that the densities at the background point and the virtual viewpoint are each a predetermined constant.

From another point of view, the present invention provides a program for enabling a computer to carry out: a step of acquiring captured images of a subject captured from a plurality of shooting points; a step of estimating the shooting points based on feature points extracted from the captured images; and a step of generating three-dimensional data of the subject, using the estimated shooting point, the captured image corresponding to the shooting point, and the machine learning model trained using the above program.

Brief Description of Drawings

FIG. 1 is a diagram showing an example of an overall configuration of virtual image generation system 9 according to an embodiment of the present invention.
FIG. 2 is a diagram showing examples of configurations of machine learning device 1 and server 2.
FIG. 3 is a diagram showing an example of viewpoint image DB 120.
FIG. 4 is a diagram illustrating images stored in viewpoint image DB 120.
FIG. 5 is a diagram showing an example of a functional configuration of machine learning device 1.
FIG. 6 is a diagram illustrating an SDF used for machine learning model 121.
FIG. 7 is a diagram illustrating that training data used for machine learning model 121 does not require a background mask.
FIG. 8 is a diagram showing an example of a functional configuration of server 2.
FIG. 9 is a diagram showing an example of how a virtual image is generated from three-dimensional data.
FIG. 10 is a diagram showing an example of new subject Jn whose image is captured by terminal 4.
FIG. 11 is a diagram showing three-dimensional data of virtual object Jnv generated by server 2 using machine learning model 221.
FIG. 12 is a diagram showing an example of a functional configuration of server 2 according to a modification.

Detailed Description

<Overall Configuration of Virtual Image Generation System>

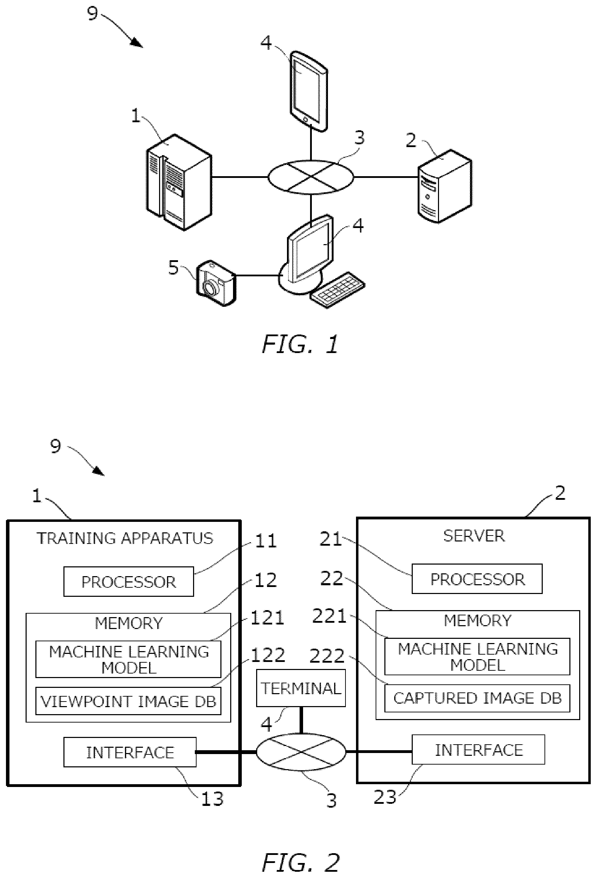

FIG. 1 is a diagram showing an example of an overall configuration of virtual image generation system 9 according to an embodiment of the present invention. Virtual image generation system 9 is a system that uses a machine learning model trained with training data in which a plurality of viewpoints are associated with images (photographs) of an object captured from the viewpoints to generate a virtual image in which a virtual object corresponding to the object is captured in a virtual space. This virtual image generation system 9 shown in FIG. 1 includes machine learning device 1, server 2, communication network 3, and terminal 4. Virtual image generation system 9 may include a plurality of terminals 4, some of which may be connectable to camera 5.

Machine learning device 1 is an apparatus that trains a machine learning model using the training data described above, and is, for example, a computer.

Server 2 is an apparatus that uses a copy of the machine learning model that has been trained by machine learning device 1 to generate three-dimensional data of a virtual object corresponding to a new object (also called a subject) from a plurality of images of the new object supplied from terminal 4. Using this three-dimensional data, server 2 or terminal 4 can generate a virtual image that can be obtained when an image of a virtual object is captured from a given virtual viewpoint in a virtual space.

Terminal 4 is a terminal apparatus carried by a user of virtual image generation system 9, and is, for example, a smartphone, a personal computer, or the like. Terminal 4 may be pre-equipped with an image capturing function such as a camera to capture images of objects. Terminal 4 may also be able to connect to a camera 5, which may be a digital still camera, a video camera, or the like and acquire images captured by them.

Communication network 3 is a wired or wireless network that connects machine learning device 1, server 2, and terminal 4 to each other to realize mutual communication. Communication network 3 may be, for example, a LAN (Local Area Network), a WAN (Wide Area Network), the Internet, or a combination of these networks. Communication network 3 may also include Public Switched Telephone Networks (PSTN), Integrated Services Digital Networks (ISDN), or the like.

<Configurations of Machine learning device and Server>

FIG. 2 is a diagram showing examples of configurations of machine learning device 1 and server 2. Machine learning device 1 includes processor 11, memory 12, and interface 13. These components are communicatively connected to each other via a bus, for example.

Processor 11 controls each unit included in machine learning device 1 by reading out and executing a computer program (hereinafter simply referred to as a program) stored in memory 12. Processor 11 is, for example, a central processing unit (CPU) or a graphics processing unit (GPU).

Interface 13 is a communication circuit that communicatively connects machine learning device 1 to communication network 3 via a wire or wirelessly.

Memory 12 is a storage means for storing an operating system, various programs, data, and so on, which are loaded into processor 11. Memory 12 includes a random access memory (RAM) or a read only memory (ROM). Note that memory 12 may include a solid state drive, a hard disk drive, or the like. Memory 12 also stores viewpoint image DB 120 and machine learning model 121.

Viewpoint image DB 120 is a database that stores a plurality of viewpoints and images obtained by capturing an object from the plurality of viewpoints in association with each other. The images stored in viewpoint image DB 120 are data obtained by actually capturing images of objects, and are also called ground truth (GT) data or the like. Machine learning model 121 is a machine learning model that is trained using pairs of viewpoints and images stored in viewpoint image DB 120 as training data. This machine learning model 121 is used to infer the three-dimensional data of the objects captured in the images described above.

Server 2 includes processor 21, memory 22, and interface 23. Processor 21 controls each unit included in server 2 by reading out and executing a program stored in memory 22. Processor 21 is, for example, a CPU or a GPU.

Interface 23 is a communication circuit that communicatively connects server 2 to communication network 3 via a wire or wirelessly.

Memory 22 is a storage means for storing an operating system, various programs, data, and so on, which are loaded into processor 21. Memory 22 includes a RAM or a ROM. Note that memory 22 may include a solid state drive, a hard disk drive, or the like. Memory 22 also stores machine learning model 221 and captured image DB 222.

Machine learning model 221 is a copy of machine learning model 121 that has been generated and trained by machine learning device 1. Server 2 acquires a copy of machine learning model 121, which has been trained, from machine learning device 1 and stores it in memory 22.

Captured image DB 222 is a database that stores a plurality of captured images acquired by server 2 from terminal 4. The captured images stored in this captured image DB 222 are, for example, photographs of subjects that are present in real space, captured from a plurality of shooting points. Unlike in viewpoint image DB 120 described above, these captured images do not need to be associated with the shooting points from which the images of the subjects were captured.

Note that both machine learning device 1 and server 2 may include an operation unit and a display unit. The operation unit is configured to receive an operation and transmit a signal corresponding to the content of the operation to processor 11. This operation unit may include, for example, operation elements such as operation buttons, a keyboard, a touch panel, and a mouse used to input various instructions.

The display unit is configured to display images under the control of processor 11. This display unit may include a display screen such as a liquid crystal display. In addition, a transparent touch panel of the operation unit described above may be disposed on top of this display screen. Note that machine learning device 1 and server 2 may be operated from an external apparatus or may present information to an external apparatus via interface 13 and interface 23, respectively.

<Configuration of Viewpoint Image DB>

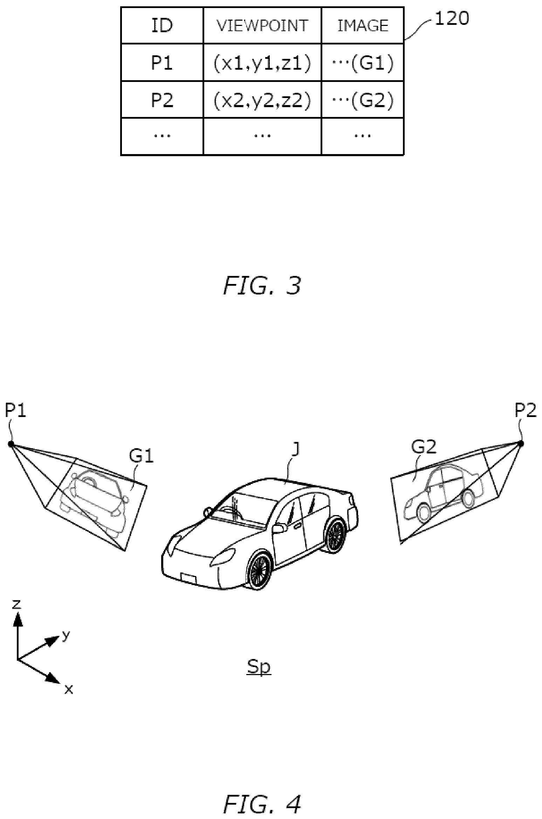

FIG. 3 is a diagram showing an example of viewpoint image DB 120. This viewpoint image DB 120 shown in FIG. 3 stores items, namely "ID", "viewpoint", and "image", in association with each other. The item "ID" in the viewpoint image DB 120 is identification information that identifies an image.

The item "viewpoint" in viewpoint image DB 120 is information indicating the viewpoint from which the image was captured. This information includes, for example, the coordinates of the viewpoint when the center point of the object whose image was captured is taken as the origin. This information may also include information regarding the viewing angle at the viewpoint.

The item "image" in viewpoint image DB 120 is image data identified by the ID described above and acquired when an image of an object is captured from the viewpoint described above.

FIG. 4 is a diagram illustrating images stored in viewpoint image DB 120. A user of virtual image generation system 9 uses, for example, a camera mounted on terminal 4 to capture images of object J (a car in the example shown in FIG. 4) that is present in real space Sp, from various viewpoints P1, P2, etc. The positions of object J and viewpoints P1, P2, etc. in real space Sp shown in FIG. 4 are expressed in an xyz right-handed coordinate space, for example.

At this time, terminal 4 specifies the positions of viewpoints P1, P2, etc. The viewpoints may be specified, for example, by using ranging equipment such as LiDAR, or by using a stereo camera to triangulate markers or the like that are installed in advance in a shooting space. In addition, the camera itself for capturing images of object J may be attached to an arm that is driven along a predetermined trajectory, and terminal 4 may specify the viewpoints described above by acquiring driving information regarding the arm.

Terminal 4 associates captured images G1, G2, etc. with the coordinates of viewpoints P1, P2, etc. from which these images were captured, and supplies these pieces of data to machine learning device 1 via communication network 3. Upon terminal 4 acquiring images of object J captured from a plurality of viewpoints together with information regarding the coordinates of the viewpoints, machine learning device 1 stores them in viewpoint image DB 120. Processor 11 of machine learning device 1 trains machine learning model 121 using the contents stored in this viewpoint image DB 120 as training data. Terminal 4 may acquire the plurality of images G1, G2, etc. described above from the externally connected camera 5 and supply them to machine learning device 1.

<Functional Configuration of Machine learning device>

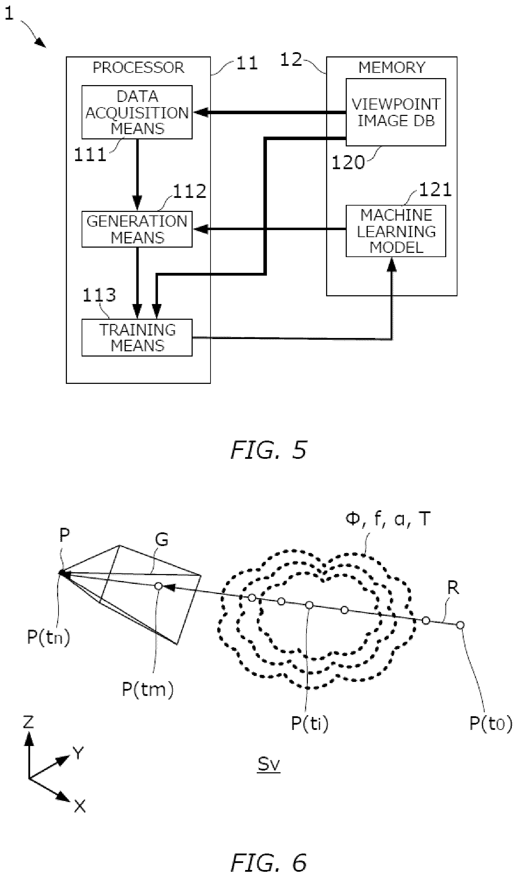

FIG. 5 is a diagram showing an example of a functional configuration of machine learning device 1. Processor 11 of machine learning device 1 functions as data acquisition means 111, generation means 112, and training means 113 shown in FIG. 5 by reading out and executing a program stored in memory 12.

Data acquisition means 111 reads out viewpoint image DB 120 described above from memory 12 and supplies it to generation means 112. This viewpoint image DB 120 is used by generation means 112 as training data. Therefore, the data acquisition means 111 is an example of the acquisition means for acquiring training data in which a plurality of viewpoints are associated with images obtained by capturing objects from the plurality of viewpoints.

Generation means 112 uses machine learning model 121 stored in memory 12, in the initial state or in the middle of training, to generate virtual images that can be obtained when an image of a virtual object corresponding to an object is captured from virtual viewpoints corresponding to a plurality of viewpoints included in viewpoint image DB 120.

Training means 113 compares the virtual images generated by generation means 112 with the images stored in viewpoint image DB 120, and updates machine learning model 121 so as to reduce the difference between them. Training of machine learning model 121 is complete when this difference meets a predetermined condition.

A detailed example of machine learning model 121 is as follows. Training means 113 references viewpoint image DB 120 to acquire images such as photographs obtained by capturing object J that is present in real space Sp and the viewpoints when the images were captured, and machine learning model 121 is updated through deep learning using the images as training data. As a result of the updating by learning, this machine learning model 121 makes it possible to generate three-dimensional data such as the shape, texture, color, etc., of a virtual object in a virtual space corresponding to object J. The generated three-dimensional data is used to generate a virtual image that can be obtained when an image of a virtual object is captured from a given virtual viewpoint in a virtual space.

In addition, this machine learning model 121 uses a physical model that represents the surface of a virtual object using the SDF described above. FIG. 6 is a diagram illustrating the SDF used for machine learning model 121.

As shown in FIG. 6, the surface of a virtual object in virtual space Sv is expressed using surface function f. This surface function f is expressed, for example, by a group of weight parameters for each layer in the MLP described above.

The physical laws that light follows in virtual space Sv are modeled using transmittance function T, opacity function $\alpha$, and density function $\Phi$. Density function $\Phi$ is a function that indicates the density at a given position in the virtual space, and is obtained using surface function f that represents the surface of the virtual object at the position. Density function $\Phi$ is, for example, a sigmoid function, but is not limited to this, as long as the function has a maximum gradient when surface function f is 0. For example, density function $\Phi$ may be an erf function (cumulative distribution function of the Gaussian distribution) or a cumulative distribution function of the Laplace distribution.

Therefore, this machine learning model 121 described herein is an example of the machine learning model that includes a surface function that defines a surface of the virtual object using a multi-layer perceptron, and a density function that indicates the densities using this surface function.

Line of sight R shown in FIG. 6 represents a ray of light traveling toward virtual viewpoint P. Line of sight R is expressed by three-dimensional vector function p(t) in which the optical path of the ray is expressed with parameter t. The range of p(t) is expressed as a three-dimensional vector, for example, using the XYZ right-handed coordinate system that represents virtual space Sv.

Point p(t0) shown in FIG. 6 is the point where line of sight R starts. Point p(t0) is called a "background point" because it is a point that is present behind the virtual object (on the background side) when viewed from virtual viewpoint P. The background point is determined by, for example, the distance from viewpoint P.

Point p(tn) shown in FIG. 6 is an expression of virtual viewpoint P using three-dimensional vector function p(t). Note that point p(tm) is a point where line of sight R intersects a surface on which an image is formed (called an image-forming surface) on the way to the virtual viewpoint P. The light at this image-forming surface forms an image observed at virtual viewpoint P.

Generation means 112 applies machine learning model 121 in an initial state or in the middle of training to each of a plurality of virtual viewpoints P corresponding to the viewpoints in viewpoint image DB 120 used as training data, to calculate the density, light transmittance, and opacity for each position on line of sight R along which light travels from a background point through a virtual object to virtual viewpoint P, thereby generating a virtual image to be formed on the image-forming surface.

Therefore, this generation means 112 is an example of the generation means for generating, in a virtual space, a virtual image that can be obtained when an image of a virtual object corresponding to an object in a real space is captured from virtual viewpoints corresponding to a plurality of viewpoints in the real space, using a machine learning model that includes densities at positions on a line of sight that extends from a background point in a background of the virtual object to the virtual viewpoint through the virtual object.

Training means 113 calculates an objective function in accordance with the difference between the image stored in viewpoint image DB 120 and the virtual image generated by generation means 112. Thereafter, this training means 113 updates machine learning model 121 using a backpropagation method or the like so that the objective function has, for example, a minimum value. Thus, training means 113 advances deep learning of machine learning model 121, and as a result, machine learning model 121 that has been trained is complete.

That is to say, training means 113 is an example of the training means for training the machine learning model by, for each virtual viewpoint, comparing the generated virtual image with the image captured from the viewpoint corresponding to the virtual viewpoint.

Further, this training means 113 is an example of the training means for training the machine learning model by updating the surface function using a backpropagation method.

Here, machine learning model 121 according to the present invention is constrained so that the densities at the background point and the virtual viewpoint described above are each a predetermined constant. That is to say, this machine learning model 121 is an example of the machine learning model that is constrained so that the densities at the background point and the virtual viewpoint are each a predetermined constant.

For example, this machine learning model 121 constrains density function Φ so that the density at the background point is 1 and the density at virtual viewpoint P is 0. Therefore, the density at a background point at a certain distance from virtual viewpoint P through the virtual object is always 1. As a result, this machine learning model 121 ignores objects that are farther away than the background point when viewed from virtual viewpoint P, so that the background that is farther away than object J in the images used for the training data does not contribute to the calculation. In addition, as the density is always 0 at virtual viewpoint P, the surface of the virtual object is always defined on the path of the light traveling along line of sight R to virtual viewpoint P.

Thus, this density function Φ included in machine learning model 121 is an example of the density function that is constrained to have a density of 1 at the background point and a density of 0 at the virtual viewpoint.

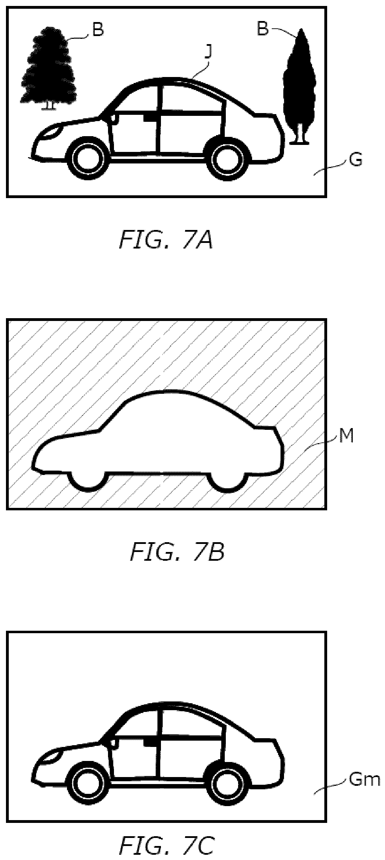

FIG. 7 is a diagram illustrating that training data used for machine learning model 121 does not require a background mask. The training data used for training machine learning model 121 includes images G of object J that is present in real space Sp. However, as shown in (a) of FIG. 7, each of such images G often contains some other objects (called background objects B) in the background in addition to object J.

Among conventional physical models, for example, the NeRF may represent this background object B as well using voxels, which may result in a decrease in the accuracy of the representation of object J. In addition, in order to calculate the surface shape of only object J, the conventional NeuS needs to exclude background object B shown in the captured image from the training data. Therefore, in the case of the conventional NeuS, it is necessary to prepare background mask M as shown in (b) of FIG. 7 for each image G.

In the case of the conventional technique, when background mask M shown in (b) of FIG. 7 is applied to image G shown in (a) in FIG. 7 to remove the masked area, clipped image Gm shown in (c) of FIG. 7 is obtained. This clipped image Gm only captures object J, and therefore, when this image is used as training data, the accuracy in estimating the three-dimensional data of object J using machine learning model 121 is improved. However, the number of images G used in the training data is generally huge, and it is difficult to set an appropriate background mask M for each of them. In addition, background mask M shown in (b) of FIG. 7 may be automatically created from, for example, the features of the image G itself shown in (a) of FIG. 7, and in such a case, unintended parts are often defined as the foreground or background.

As described above, machine learning model 121 according to the present invention is constrained so that the densities at the background point and the virtual viewpoint are each a predetermined constant, and therefore objects that are farther away than the background point as viewed from virtual viewpoint P are ignored during the learning process. Therefore, in this machine learning model 121, there is no need to apply mask processing to each of images G that constitute the training data.

The physical model described below is an example of the physical model included in machine learning model 121 described above. Machine learning model 121 includes a physical model using transmittance function T shown in the following Formula (1) and opacity function $\alpha$ shown in the following Formula (2).

$$T_i = \prod_{j=1}^{i-1}(1 - \alpha_j) \quad ...(1)$$

$$\alpha_i = \max\left(\frac{\Phi_s(f(\mathbf{p}(t_i))) - \Phi_s(f(\mathbf{p}(t_{i+1})))}{\Phi_s(f(\mathbf{p}(t_i)))}, 0\right) \quad ...(2)$$

Transmittance function T shown in formula (1) is a function for calculating the transmittance of light that travels along line of sight R and reaches virtual viewpoint P, and is calculated as the product of the transparencies of all points along line of sight R. Here, each transparency is a value obtained by subtracting opacity function $\alpha$ from 1.

Opacity function $\alpha$ is the function expressed by Formula (2). This opacity function $\alpha$ is a function for calculating the opacity at a given position on line of sight R, and is defined as the greater of either a value calculated based on the difference between density $\Phi_s$ at the position and density $\Phi_s$ at a position that is a discrete distance closer to virtual viewpoint P than the position, or 0.

That is to say, machine learning device 1 that trains machine learning model 121 that uses the physical model shown in this example is an example of the machine learning device characterized in that, in the machine learning model, transmittance function T indicating the transmittance of light that travels along the line of sight to the virtual viewpoint, and opacity function $\alpha$ indicating the opacity at a given position along the line of sight are expressed by Formulas (1) and (2) described above, where density function $\Phi$ indicates the density at a given position along the line of sight, and surface function f defines the surface of the virtual object.

<Functional Configuration of Server>

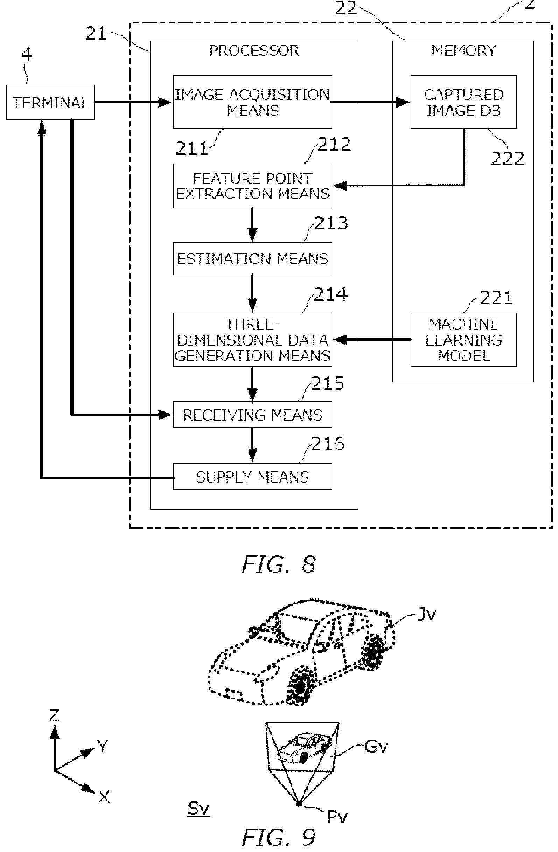

FIG. 8 is a diagram showing an example of a functional configuration of server 2. Processor 21 of server 2 functions as image acquisition means 211, feature point extraction means 212, estimation means 213, three-dimensional data generation means 214, receiving means 215, and supply means 216 shown in FIG. 8 by reading out and executing a program stored in memory 22. Note that in FIG. 8, communication network 3 that communicatively connects terminal 4 and server 2 is omitted.

Image acquisition means 211 acquires captured images of a subject captured from a plurality of shooting points. This image acquisition means 211 stores the acquired captured images in captured image DB 222 in memory 22. This image acquisition means 211 is an example of the image acquisition means for acquiring captured images of a subject captured from a plurality of shooting points.

Feature point extraction means 212 reads out the plurality of captured images acquired by image acquisition means 211, from captured image DB 222, and extracts feature points from each of the images. This feature point extraction means 212 detects, for example, the contour of the subject shown in a captured image using an edge detection algorithm such as the Sobel method, the Laplacian of Gaussian method, or the Canny method, and extracts points showing common characteristics from the detected contour as feature points.

Estimation means 213 estimates the shooting point of each of the plurality of captured images based on the feature points extracted by feature point extraction means 212. The plurality of captured images are captured from different shooting points, and the feature points extracted from each of the images tend to be more similar the closer the shooting points are. Therefore, estimation means 213 estimates the degree of proximity of the shooting points, which are the positions from which the plurality of captured images were captured, based on the similarity of the feature points, thereby estimating the arrangement of the shooting points in the space. That is to say, this estimation means 213 is an example of the estimation means for estimating the shooting points based on feature points extracted from the captured images.

Three-dimensional data generation means 214 receives as input data a plurality of captured images read out from captured image DB 222 and the shooting points estimated as the positions from which the captured images were captured, and generates three-dimensional data of the subject shown in the plurality of captured images with reference to machine learning model 221. Note that, as described above, this machine learning model 221 is a copy of machine learning model 121 that has been trained by machine learning device 1. That is to say, this three-dimensional data generation means 214 is an example of the three-dimensional data generation means for generating three-dimensional data of an object using an estimated shooting point, a captured image corresponding to this shooting point, and a machine learning model that has been trained by a learning device.

Receiving means 215 receives a request from terminal 4 for three-dimensional data of the subject shown in the captured images. That is to say, this receiving means 215 is an example of the receiving means for receiving a request from the terminal.

Supply means 216 supplies the three-dimensional data generated in response to the received request to terminal 4. This is an example of the supply means for supplying, to the terminal, the three-dimensional data generated by the three-dimensional data generation means in response to the request from the terminal.

FIG. 9 is a diagram showing an example of how a virtual image is generated from three-dimensional data. For example, upon terminal 4 capturing an image of object J shown in FIG. 4 (in this case, the same as the car used for the training data) as the subject and supplying the captured image to server 2, server 2 generates three-dimensional data of virtual object Jv in virtual space Sv. Terminal 4 can acquire this three-dimensional data and generate, for example, virtual image Gv, which is an image of virtual object Jv captured from a given virtual viewpoint Pv.

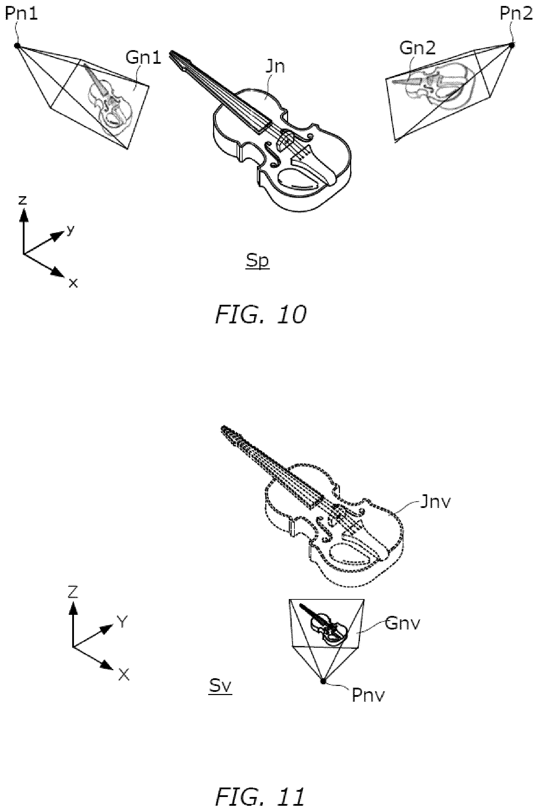

Terminal 4 may also capture an image of an object other than object J used for the training data, as the subject. FIG. 10 is a diagram showing an example of new subject Jn whose image is captured by terminal 4. Subject Jn shown in FIG. 10 is an object that is present in real space Sp, and is, for example, a musical instrument such as a violin. This is an object that is not included in the viewpoint images that constitute the training data. Terminal 4 captures images of subject Jn from various shooting points Pn1, Pn2, etc., and generates captured images Gn1, Gn2, etc., and supplies the images to server 2.

FIG. 11 is a diagram showing three-dimensional data of virtual object Jnv generated by server 2 using machine learning model 221. Upon acquiring captured images Gn1, Gn2, etc., server 2 references machine learning model 221, using the images as input data, to generate three-dimensional data of virtual object Jnv corresponding to subject Jn in virtual space Sv. Terminal 4 can acquire this three-dimensional data from server 2, and based on this data, generate virtual image Gnv that can be obtained when an image of virtual object Jnv expressed by this three-dimensional data is captured from given (virtual) shooting point Pnv.

The processing to generate a virtual image from three-dimensional data is performed according to the following Formula (3), for example.

$$\hat{C} = \sum_{i=1}^{n} T_i \alpha_i c_i,$$

$$\dots (3)$$

Here, $T_i$ is the transmittance at the position specified by $i$ on line of sight R, $\alpha_i$ is the opacity at the position, and $c_i$ is the color at the position. Formula (3) shows that the colors of the pixels of the virtual image formed on the image-forming surface of the virtual viewpoint by the light traveling along line of sight R can be obtained by integrating the product of $T_i$, $\alpha_i$, and $c_i$ on line of sight R. Note that the colors of the pixels can be expressed in an RGB color space using the three primary colors of light, namely red, green, and blue, a YUV color space expressed by luminance signal Y and two color difference signals, a YCbCr color space, or the like.

According to the conventional technique, unlike the present invention, the densities at predetermined points in a virtual space are not constrained by setting constants thereto. For example, in the case of the NeRF, the densities of all coordinates defined in the virtual space are each often given a random initial value. In addition, the NeRF has high optimization stability, and therefore, even if the density of none of the coordinates is specifically constrained, the densities are likely to converge to the desired values given a reasonable number of training iterations. Therefore, in the case of the NeRF, there is no need to set the density of any coordinate in the virtual space to a constant.

On the other hand, in the case of the NeuS, an SDF that represents the surface of a virtual object is extracted, so images without a background that contain an object corresponding to this virtual object are often used as training data. In addition, the NeuS generally has less optimization stability and slower processing speed than the NeRF. Therefore, when obtaining a representation of the surface of a virtual object from images, using a machine learning model, masking processing or the like is performed on the images in advance to remove information other than information regarding the object.

When training a machine learning model for estimating a three-dimensional model of an object in a virtual space using images obtained by capturing images of the object from a plurality of viewpoints as training data, machine learning device 1 included in virtual image generation system 9 according to the present invention trains a machine learning model that is constrained so that the densities at the background point and the virtual viewpoint are each a predetermined constant. Therefore, this machine learning device 1 does not need to perform processing to remove the background from each of the images constituting the training data during the process of training the machine learning model.

In particular, the present invention as exemplified by the embodiment trains a machine learning model that is constrained so that the densities of the background point and the virtual viewpoint are 1 and 0, respectively. The present invention is based on the NeuS. In the case of the NeuS, the density will always be 0 somewhere along line of sight R during the calculation process, so there is no need to guarantee that the density at voids in transmittance function T is 0. Therefore, according to the conventional technique based on the NeuS, there is no need to distinguish the virtual viewpoint from other coordinates and set the value of the density at the point to 0. The present invention has the advantage that the virtual viewpoint is distinguished from other coordinates and the density value at the point is set to 0, and therefore, the density at voids in transmittance function T tends to converge to 0.

In addition, even when raw captured images (photographs or the like) of a subject taken by a user from a plurality of viewpoints using a smartphone or the like are input to the server according to the present invention, the server can generate three-dimensional data of the subject from the captured images, using the trained machine learning model.

The raw captured images also include backgrounds, but when handling them with the NeuS, the light rays (light traveling along line of sight R) emitted from every pixel constituting the captured images will collide with some object, and therefore, transmittance function T should fall to 0 at that point. The machine learning model trained using the present invention is constrained so that the density at the background point is 1, which has the effect of making it easier to obtain a convergent solution in which transmittance function T becomes 0 at the above-described positions where the light rays collide with the object.

<Modifications>

The embodiment has been described above, but the content of this embodiment can be modified as follows. In addition, the following modifications may be combined.

<1> In the above-described embodiment, virtual image generation system 9 includes machine learning device 1 and server 2 separately, but either one of them may also have the function of the other. For example, server 2 may store training data corresponding to viewpoint image DB 120 described above in memory 22. In this case, processor 21 of server 2 may train machine learning model 221 based on this training data.

<2> In the above-described embodiment, processor 11 and processor 21 are both a CPU or a GPU, but they may be configured to work together, or may have other configurations. For example, these processors may be field programmable gate arrays (FPGAs) or include an FPGA. These processors may also include an application specific integrated circuits (ASIC) or another programmable logic device.

<3> In the above-described embodiment, terminal 4 requests three-dimensional data of the captured subject, but may also specify a virtual viewpoint from which the subject is to be captured and request a virtual image that can be obtained when an image of the subject is captured from the virtual viewpoint. In this case, server 2 may generate, through rendering, a virtual image captured from a specified virtual viewpoint, of a subject in a virtual space expressed by three-dimensional data generated by the three-dimensional data generation means, and supply the generated virtual image to terminal 4.

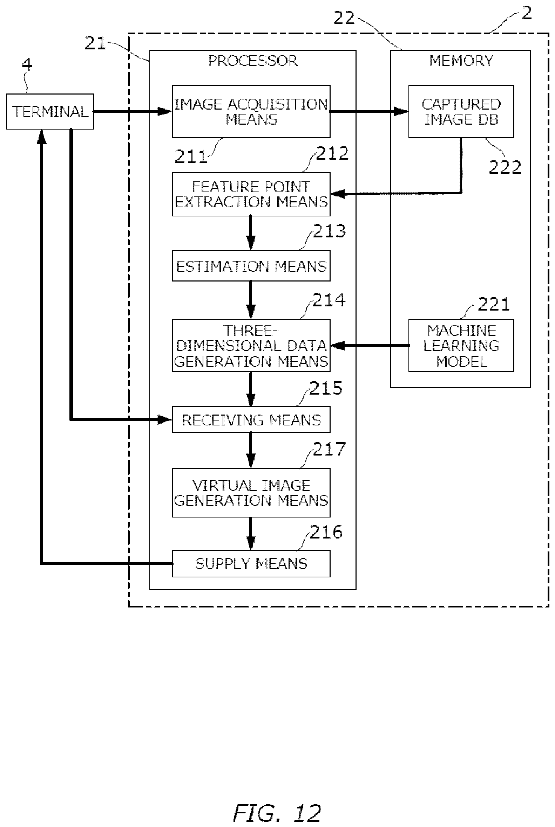

FIG. 12 is a diagram showing an example of a functional configuration of server 2 according to a modification. Processor 21 of server 2 shown in FIG. 12 realizes virtual image generation means 217 in addition to the functions realized by processor 21 shown in FIG. 8. This virtual image generation means 217 generates virtual images, using three-dimensional data generated by three-dimensional data generation means 214.

In this case, receiving means 215 receives from terminal 4 a specification of a virtual viewpoint from which an image of a subject is captured in a virtual space. That is to say, this receiving means 215 is an example of the receiving means for receiving, from a terminal, a specification of a virtual viewpoint from which an image of the subject is captured.

Virtual image generation means 217 generates a virtual image of the subject expressed by three-dimensional data captured from the specified virtual viewpoint, based on the specification received by receiving means 215. That is to say, this virtual image generation means 217 is an example of the virtual image generation means for generating a virtual image that can be obtained when an image of the subject expressed by the three-dimensional data generated by the three-dimensional data generation means is captured from the virtual viewpoint indicated by the specification received from the terminal.

Thereafter, supply means 216 supplies the generated virtual image to terminal 4. That is to say, this supply means 216 is an example of the supply means for supplying, to the terminal, the virtual image generated by the virtual image generation means in response to the specification received from the terminal. Even in this case, terminal 4 can obtain a virtual image of the captured subject as seen from the specified virtual viewpoint.

<4> In summary, a program according to the present invention may be, in one aspect, a program that enables a computer that includes one or more processors to carry out: a step of acquiring training data in which a plurality of viewpoints and images obtained by capturing an object from the plurality of viewpoints are associated with each other; a

EP 4 524 899 B1

step of generating, in a virtual space, a virtual image that can be obtained when a virtual object corresponding to the object is captured from a virtual viewpoint corresponding to the viewpoint, using a machine learning model that includes densities at positions on a line of sight that extends from a background point in a background of the virtual object to the virtual viewpoint through the virtual object; and a step of training a machine learning model by comparing, for each virtual viewpoint, the generated virtual image and an image captured from the viewpoint corresponding to the virtual viewpoint, wherein the machine learning model is constrained so that densities at the background point and the virtual viewpoint are each a predetermined constant.

A program according to the present invention may be, in another aspect, a program that enables a computer that includes one or more processors to carry out: a step of acquiring captured images of a subject captured from a plurality of shooting points; a step of estimating shooting points based on feature points extracted from the captured images; and a step of generating three-dimensional data of the subject, using the estimated shooting point, the captured image corresponding to the shooting point, and a machine learning model trained by a machine learning device using a program executed by processor 11.

<Reference Signs List>

1 ... Machine learning device, 11 ... Processor, 111 ... Data acquisition Means, 112 ... Generation Means, 113 ... Training Means, 12 ... Memory, 120 ... Viewpoint Image DB, 121 ... Machine Learning Model, 13 ... Interface, 2 ... Server, 21 ... Processor, 211 ... Image acquisition Means, 212 ... Feature Point Extraction Means, 213 ... Estimation Means, 214 ... Three-dimensional Data Generation Means, 215 ... Receiving Means, 216 ... Supply Means, 217 ... Virtual Image Generation Means, 22 ... Memory, 221 ... Machine Learning Model, 222 ... Captured Image DB, 23 ... Interface, 3 ... Communication Network, 4 ... Terminal, 5 ... Camera, 9 ... Virtual Image Generation System.

**Claims**

1. A machine learning device comprising:

   a data acquisition means configured to acquire training data in which a plurality of viewpoints are associated with images obtained by capturing objects from the plurality of viewpoints;
   a generation means configured to generate, in a virtual space, a virtual image that can be obtained when an image of a virtual object corresponding to the object is captured from a virtual viewpoint corresponding to the viewpoint, using a machine learning model that generates the virtual object by representing the surface of the object as a zero-level set of a signed-distance function using a multi-layer perceptron (MLP) and that includes densities at positions on a line of sight that extends from a background point in a background of the virtual object to the virtual viewpoint through the virtual object; and
   a training means configured to train the machine learning model by, for each virtual viewpoint, comparing the generated virtual image with the image captured from the viewpoint corresponding to the virtual viewpoint, wherein the machine learning model is constrained so that the densities at the background point and the virtual viewpoint are each a predetermined constant, the predetermined constant being 1 for a background point and 0 for a virtual point.

2. The machine learning device according to claim 1, wherein

   the machine learning model includes a surface function that defines a surface of the virtual object using a multi-layer perceptron, and a density function that indicates the densities using the surface function, and
   the training means trains the machine learning model by updating the surface function using an error propagation method..

3. The machine learning device according to claim 2,

   wherein, in the machine learning model,
   transmittance function T indicating a transmittance of light that travels along the line of sight to the virtual viewpoint, and
   opacity function $\alpha$ indicating an opacity at a given position along the line of sight
   are expressed by Formulas (1) and (2) below:

$$T_i = \prod_{j=1}^{i-1}(1 - \alpha_j) \quad \dots (1)$$

$$\alpha_i = \max\left(\frac{\Phi_s(f(\mathbf{p}(t_i))) - \Phi_s(f(\mathbf{p}(t_{i+1})))}{\Phi_s(f(\mathbf{p}(t_i)))}, 0\right) \quad \dots (2)$$

where density function $\Phi$ indicates a density at a given position along the line of sight, and surface function f defines the surface of the virtual object.

4. A system comprising:

an image acquisition means configured to acquire captured images of a subject captured from a plurality of shooting points;
an estimation means configured to estimate the shooting points based on feature points extracted from the captured images; and
a three-dimensional data generation means comprising the machine learning device according to any one of the claims 1 to 3 and configured to generate three-dimensional data of the subject, using the estimated shooting points, the captured images corresponding to the shooting points, and the machine learning model.

5. The system according to claim 4, further comprising:

a receiving means configured to receive a request from a terminal; and
a supply means configured to supply, to the terminal, the three-dimensional data generated by the three-dimensional data generation means in response to the request.

6. The system according to claim 4, further comprising:

a receiving means configured to receive, from a terminal, a specification of a virtual viewpoint from which an image of the subject is captured;
a virtual image generation means configured to generate a virtual image that can be obtained when an image of the subject expressed by the three-dimensional data generated by the three-dimensional data generation means is captured from the virtual viewpoint indicated by the specification; and
a supply means configured to supply, to the terminal, the virtual image generated by the virtual image generation means in response to the specification.

7. A program for causing a computer to:

acquire training data in which a plurality of viewpoints and images obtained by capturing an object from the plurality of viewpoints are associated with each other;
generate, in a virtual space, a virtual image that can be obtained when a virtual object corresponding to the object is captured from a virtual viewpoint corresponding to the viewpoint, using a machine learning model that generates the virtual object by representing the surface of the object as a zero-level set of a signed-distance function using a multi-layer perceptron (MLP) and that includes densities at positions on a line of sight that extends from a background point in a background of the virtual object to the virtual viewpoint through the virtual object; and
train the machine learning model by, for each virtual viewpoint, comparing the generated virtual image with the image captured from the viewpoint corresponding to the virtual viewpoint,
wherein the machine learning model is constrained so that the densities at the background point and the virtual viewpoint are each a predetermined constant, the predetermined constant being 1 for a background point and 0 for a virtual point.

8. A program for causing a computer to:

acquire captured images of a subject captured from a plurality of shooting points;

estimate the shooting points based on feature points extracted from the captured images; and
generate three-dimensional data of the subject, using the estimated shooting point, the captured image corresponding to the shooting point, and the machine learning model trained using the program according to claim 7.

**Patentansprüche**

1. Vorrichtung für maschinelles Lernen, umfassend:

   eine Datenerfassungseinrichtung, die konfiguriert ist, um Trainingsdaten zu erfassen, in denen eine Vielzahl von Blickpunkten mit Bildern assoziiert ist, die durch Aufnehmen von Objekten von der Vielzahl von Blickpunkten erlangt werden;
   eine Erzeugungseinrichtung, die konfiguriert ist, um in einem virtuellen Raum ein virtuelles Bild zu erzeugen, das erlangt werden kann, wenn ein Bild eines virtuellen Objekts, das dem Objekt entspricht, von einem virtuellen Blickpunkt aufgenommen wird, der dem Blickpunkt entspricht, unter Verwendung eines Modells maschinellen Lernens, das das virtuelle Objekt erzeugt, indem es die Oberfläche des Objekts als einen Null-Ebenen-Satz einer vorzeichenbehafteten Abstandsfunktion unter Verwendung eines mehrschichtigen Perzeptrons (MLP) darstellt, und das Dichten an Positionen auf einer Sichtlinie beinhaltet, die sich von einem Hintergrundpunkt in einem Hintergrund des virtuellen Objekts zu dem virtuellen Blickpunkt durch das virtuelle Objekt erstreckt; und
   ein Trainingseinrichtung, die konfiguriert ist, um das Modell maschinellen Lernens zu trainieren, indem es, für jeden virtuellen Blickpunkt, das erzeugte virtuelle Bild mit dem Bild vergleicht, das von dem Blickpunkt aufgenommen wird, der dem virtuellen Blickpunkt entspricht,
   wobei das Modell maschinellen Lernens eingeschränkt ist, sodass die Dichten an dem Hintergrundpunkt und an dem virtuellen Blickpunkt jeweils eine vorbestimmte Konstante sind, wobei die vorbestimmte Konstante 1 für einen Hintergrundpunkt und 0 für einen virtuellen Punkt ist.

2. Vorrichtung für maschinelles Lernen nach Anspruch 1, wobei

   das Modell maschinellen Lernens eine Oberflächenfunktion, die eine Oberfläche des virtuellen Objekts unter Verwendung eines mehrschichtigen Perzeptrons definiert, und eine Dichtefunktion, die die Dichten unter Verwendung der Oberflächenfunktion angibt, beinhaltet, und
   die Trainingseinrichtung das Modell maschinellen Lernens durch Aktualisieren der Oberflächenfunktion unter Verwendung einer Fehlerfortpropagationsmethode trainiert.

3. Vorrichtung für maschinelles Lernen nach Anspruch 2,

   wobei in dem Modell maschinellen Lernens,
   eine Transmissionsfunktion T, die einen Transmissionsgrad von Licht angibt, das sich entlang der Sichtlinie zu dem virtuellen Blickpunkt bewegt, und
   die Trübungsfunktion $\alpha$, die eine Trübung an einer gegebenen Position entlang der Sichtlinie angibt, durch die nachstehenden Formeln (1) und (2) ausgedrückt sind:

$$T_i = \prod_{j=1}^{i-1}(1 - \alpha_j) \quad \text{... (1)}$$

$$\alpha_i = \max\left(\frac{\Phi_s(f(\mathbf{p}(t_i))) - \Phi_s(f(\mathbf{p}(t_{i+1})))}{\Phi_s(f(\mathbf{p}(t_i)))}, 0\right) \quad \text{... (2)}$$

   wobei die Dichtefunktion $\Phi$ eine Dichte an einer gegebenen Position entlang der Sichtlinie angibt, und eine Oberflächenfunktion f die Oberfläche des virtuellen Objekts definiert.

4. System, umfassend:

eine Bilderfassungseinrichtung, die konfiguriert ist, um aufgenommene Bilder eines Subjekts zu erfassen, die von einer Vielzahl von Aufnahmepunkten aufgenommen werden;

eine Schätzeinrichtung, das konfiguriert ist, um die Aufnahmepunkte basierend auf Merkmalspunkten zu schätzen, die aus den aufgenommenen Bildern extrahiert werden; und

eine Erzeugungseinrichtung dreidimensionaler Daten, umfassend die Vorrichtung für maschinelles Lernen nach einem der Ansprüche 1 bis 3 und die konfiguriert ist, um unter Verwendung der geschätzten Aufnahmepunkte, der aufgenommenen Bilder, die den Aufnahmepunkten entsprechen, und des Modells maschinellen Lernens dreidimensionale Daten des Subjekts zu erzeugen.

**5.** System nach Anspruch 4, ferner umfassend:

eine Empfangseinrichtung, die konfiguriert ist, um eine Anfrage von einem Endgerät zu empfangen; und
eine Zufuhreinrichtung, die konfiguriert ist, um dem Endgerät die dreidimensionalen Daten zuzuführen, die von der Erzeugungseinrichtung dreidimensionaler Daten als Reaktion auf die Anforderung erzeugt werden.

**6.** System nach Anspruch 4, ferner umfassend:

eine Empfangseinrichtung, die konfiguriert ist, um von einem Endgerät eine Spezifikation eines virtuellen Blickpunkts zu empfangen, von dem aus ein Bild des Subjekts aufgenommen wird;

eine Erzeugungseinrichtung für virtuelles Bild, die konfiguriert ist, um ein virtuelles Bild zu erzeugen, das erlangt werden kann, wenn ein Bild des Subjekts, das durch die dreidimensionalen Daten ausgedrückt wird, die von der Erzeugungseinrichtung dreidimensionaler Daten erzeugt werden, von dem virtuellen Blickpunkt aus aufgenommen, der durch die Spezifikation angegeben wird; und

eine Zufuhreinrichtung, die konfiguriert ist, um dem Endgerät das virtuelle Bild zuzuführen, das von der Erzeugungseinrichtung für virtuelles Bild als Reaktion auf die Spezifikation erzeugt wird.

**7.** Programm, um einen Computer zu Folgendem zu veranlassen:

Erfassen von Trainingsdaten, in denen eine Vielzahl von Blickpunkten und Bildern, die durch Aufnehmen eines Objekts von der Vielzahl von Blickpunkten erlangt werden, miteinander assoziiert sind;

Erzeugen, in einem virtuellen Raum, eines virtuellen Bilds, das erlangt werden kann, wenn ein Bild eines virtuellen Objekts, das dem Objekt entspricht, von einem virtuellen Blickpunkt aufgenommen wird, der dem Blickpunkt entspricht, unter Verwendung eines Modells maschinellen Lernens, das das virtuelle Objekt erzeugt, indem es die Oberfläche des Objekts als einen Null-Ebenen-Satz einer vorzeichenbehafteten Abstandsfunktion unter Verwendung eines mehrschichtigen Perzeptrons (MLP) darstellt, und das Dichten an Positionen auf einer Sichtlinie beinhaltet, die sich von einem Hintergrundpunkt in einem Hintergrund des virtuellen Objekts zu dem virtuellen Blickpunkt durch das virtuelle Objekt erstreckt; und

Trainieren des Modells maschinellen Lernens, indem es, für jeden virtuellen Blickpunkt, das erzeugte virtuelle Bild mit dem Bild vergleicht, das von dem Blickpunkt aufgenommen wird, der dem virtuellen Blickpunkt entspricht, wobei das Modell maschinellen Lernens eingeschränkt ist, sodass die Dichten an dem Hintergrundpunkt und an dem virtuellen Blickpunkt jeweils eine vorbestimmte Konstante sind, wobei die vorbestimmte Konstante 1 für einen Hintergrundpunkt und 0 für einen virtuellen Punkt ist.

**8.** Programm, um einen Computer zu Folgendem zu veranlassen:

Erfassen von Bildern eines Subjekts, die von einer Vielzahl von Aufnahmepunkten aufgenommen werden;
Schätzung der Aufnahmepunkte basierend auf Merkmalspunkten, die aus den aufgenommenen Bildern extrahiert werden; und

Erzeugen dreidimensionaler Daten des Subjekts unter Verwendung des geschätzten Aufnahmepunkts, des aufgenommenen Bilds, das dem Aufnahmepunkt entspricht, und des Modells maschinellen Lernens, das unter Verwendung des Programms nach Anspruch 7 trainiert wird.

**Revendications**

**1.** Dispositif d'apprentissage automatique, comprenant :

un moyen d'acquisition de données configuré pour acquérir des données d'entraînement dans lesquelles une pluralité de points de vue sont associés à des images obtenues en capturant des objets à partir de la pluralité de points de vue ;

un moyen de génération configuré pour générer, dans un espace virtuel, une image virtuelle qui peut être obtenue lorsqu'une image d'un objet virtuel correspondant à l'objet est capturée à partir d'un point de vue virtuel correspondant au point de vue, en utilisant un modèle d'apprentissage automatique qui génère l'objet virtuel en représentant la surface de l'objet comme un ensemble de niveau zéro d'une fonction de distance signée à l'aide d'un perceptron multicouche (MLP) et qui comprend des densités à des positions sur une ligne de visée qui s'étend d'un point d'arrière-plan dans un arrière-plan de l'objet virtuel au point de vue virtuel à travers l'objet virtuel ; et

un moyen d'entraînement configuré pour entraîner le modèle d'apprentissage automatique en comparant, pour chaque point de vue virtuel, l'image virtuelle générée à l'image capturée à partir du point de vue correspondant au point de vue virtuel,

dans lequel le modèle d'apprentissage automatique est contraint de sorte que les densités au point d'arrière-plan et au point de vue virtuel sont chacune une constante prédéterminée, la constante prédéterminée étant 1 pour un point d'arrière-plan et 0 pour un point de vue virtuel.

2. Dispositif d'apprentissage automatique selon la revendication 1, dans lequel

le modèle d'apprentissage automatique comprend une fonction de surface qui définit une surface de l'objet virtuel à l'aide d'un perceptron multicouche, et une fonction de densité qui indique les densités à l'aide de la fonction de surface, et

le moyen d'entraînement entraîne le modèle d'apprentissage automatique en mettant à jour la fonction de surface à l'aide d'un procédé de propagation d'erreur.

3. Dispositif d'apprentissage automatique selon la revendication 2,

dans lequel, dans le modèle d'apprentissage automatique,
une fonction de transmittance T indiquant une transmittance de la lumière qui se propage le long de la ligne de visée vers le point de vue virtuel, et
une fonction d'opacité $\alpha$ indiquant une opacité à une position donnée le long de la ligne de visée
sont exprimées par les formules (1) et (2) ci-dessous :

$$T_i = \prod_{j=1}^{i-1}(1 - \alpha_j) \quad \text{... (1)}$$

$$\alpha_i = \max\left(\frac{\Phi_s(f(\mathbf{p}(t_i))) - \Phi_s(f(\mathbf{p}(t_{i+1})))}{\Phi_s(f(\mathbf{p}(t_i)))}, 0\right) \quad \text{... (2)}$$

où la fonction de densité $\Phi$ indique une densité à une position donnée le long de la ligne de visée, et
la fonction de surface f définit la surface de l'objet virtuel.

4. Système, comprenant :

un moyen d'acquisition d'images configuré pour acquérir des images capturées d'un sujet à partir d'une pluralité de points de prise de vue ;

un moyen d'estimation configuré pour estimer les points de prise de vue sur la base de points caractéristiques extraits des images capturées ; et

un moyen de génération de données tridimensionnelles comprenant le dispositif d'apprentissage automatique selon l'une quelconque des revendications 1 à 3, et configuré pour générer des données tridimensionnelles du sujet, à l'aide des points de prise de vue estimés, des images capturées correspondant aux points de prise de vue, et du modèle d'apprentissage automatique.

5. Système selon la revendication 4, comprenant en outre :

un moyen de réception configuré pour recevoir une demande provenant d'un terminal ; et

un moyen de fourniture configuré pour fournir, au terminal, les données tridimensionnelles générées par le moyen de génération de données tridimensionnelles, en réponse à la demande.

6. Système selon la revendication 4, comprenant en outre :

un moyen de réception configuré pour recevoir, en provenance d'un terminal, une spécification d'un point de vue virtuel à partir duquel une image du sujet est capturée ;
un moyen de génération d'images virtuelles configuré pour générer une image virtuelle qui peut être obtenue lorsqu'une image du sujet exprimée par les données tridimensionnelles générées par le moyen de génération de données tridimensionnelles est capturée à partir du point de vue virtuel indiqué par la spécification ; et
un moyen de fourniture configuré pour fournir, au terminal, l'image virtuelle générée par le moyen de génération d'images virtuelles, en réponse à la spécification.

7. Programme destiné à amener un ordinateur à :

acquérir des données d'entraînement dans lesquelles une pluralité de points de vue et d'images obtenus en capturant un objet à partir de la pluralité de points de vue sont mutuellement associés ;
générer, dans un espace virtuel, une image virtuelle qui peut être obtenue lorsqu'un objet virtuel correspondant à l'objet est capturé à partir d'un point de vue virtuel correspondant au point de vue, à l'aide d'un modèle d'apprentissage automatique qui génère l'objet virtuel en représentant la surface de l'objet comme un ensemble de niveau zéro d'une fonction de distance signée à l'aide d'un perceptron multicouche (MLP) et qui inclut des densités à des positions sur une ligne de visée qui s'étend d'un point d'arrière-plan dans un arrière-plan de l'objet virtuel au point de vue virtuel à travers l'objet virtuel ; et
entraîner le modèle d'apprentissage automatique en comparant, pour chaque point de vue virtuel, l'image virtuelle générée à l'image capturée à partir du point de vue correspondant au point de vue virtuel,
dans lequel le modèle d'apprentissage automatique est contraint de sorte que les densités au point d'arrière-plan et au point de vue virtuel sont chacune une constante prédéterminée, la constante prédéterminée étant 1 pour un point d'arrière-plan et 0 pour un point de vue virtuel.

8. Programme destiné à amener un ordinateur à :

acquérir des images capturées d'un sujet à partir d'une pluralité de points de prise de vue ;
estimer les points de prise de vue sur la base de points caractéristiques extraits des images capturées ; et
générer des données tridimensionnelles du sujet, à l'aide du point de prise de vue estimé, de l'image capturée correspondant au point de prise de vue, et du modèle d'apprentissage automatique entraîné à l'aide du programme selon la revendication 7.

*FIG. 1*

*FIG. 2*

| ID | VIEWPOINT | IMAGE | |
|----|-----------|-------|--|
| P1 | (x1,y1,z1) | ···(G1) | 120 |
| P2 | (x2,y2,z2) | ···(G2) | |
| ... | ... | ... | |

*FIG. 3*

*FIG. 4*

*FIG. 5*

*FIG. 6*

FIG. 7A

FIG. 7B

FIG. 7C

FIG. 8

FIG. 9

Pn1  Gn1  Jn  Gn2  Pn2

z  y  x

Sp

*FIG. 10*

Jnv

Z  Y  X

Sv  Gnv

Pnv

*FIG. 11*

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021071749 A

### Non-patent literature cited in the description

- **PENG WANG et al.** *NeuS: Learning Neural Implicit Surfaces by Volume Rendering for Multi-view Reconstruction*, 20 June 2021, https:// arxiv. org/pdf/2106.10689v1